# EUROPEAN PATENT SPECIFICATION

(11) **EP 3 478 604 B1**
(45) Date of publication and mention of the grant of the patent: **02.03.2022**
(21) Application number: 17751835.4
(22) Date of filing: 28.06.2017
(51) Int. Cl.: B65G 1/04

(54) **STORAGE PLANT OF ARTICLES WITH HIGH LONGITUDINAL DEVELOPMENT**
AUFBEWAHRUNGSANLAGE VON ARTIKELN MIT HOHER LÄNGSENTFALTUNG
INSTALLATION DE STOCKAGE D'ARTICLES À ÉTENDUE LONGITUDINALE ÉLEVÉE

(30) Priority: 29.06.2016 IT UA20164760
(43) Date of publication of application: 08.05.2019
(73) Proprietor: Automha S.p.A., 24052 Azzano S. Paolo (BG) (IT)
(72) Inventor: DANNE, Walter, 20863 Concorezzo (MB) (IT)
(74) Representative: Giavarini, Francesco
(86) International application number: PCT/IB2017/053864
(87) International publication number: WO 2018/002837

(56) References cited:
- JP-A- H06 191 609
- JP-A- 2012 012 195
- JP-U- H 047 508
- JP-U- H0 475 813
- US-A- 2 298 145
- US-A- 4 406 570
- US-A1- 2003 185 660

## Description

The present invention relates to a storage plant of articles with high longitudinal development, in particular to a storage plant of rolls of fabric, more in particular to a storage plant of rolls of fabric in which these rolls require to be frequently moved and re-positioned.

The plant of the present invention will be illustrated and described with reference to the storage of rolls of fabric; however, its use and applicability are of more general type as the plant can generally be used for the storage of articles with high longitudinal development and basically with a circular section.

In warehouses for the storage of rolls of fabric, these rolls are stored on specific shelves from which they are picked up each time it is necessary to cut from them a given amount of fabric to be used in subsequent operations. From the shelf the roll is thus sent to a fabric cutting station in which a predetermined amount of fabric is collected. After the operation to cut and collect the fabric has terminated, the roll must then be returned to the shelf until this specific fabric is next required.

In cases in which a large number of types of fabric (and thus of rolls) must be managed and a large number of operations to cut and pick up fabric must be carried out, automated management of the warehouse can become very problematic.

In practice, management of the transport of the rolls normally involves downtime and does not allow the best use of the storage possibilities in the shelves, as empty spaces must be left in them to allow the rolls to be moved and returned to the shelves. Moreover, when the rolls are positioned in multi-depth configuration, it is not tangibly possible to operate selectively, i.e. to pick up a specific roll with a single and specific operation. JPH047508U discloses a storage plant according to the preamble of claim 1.

Based on these considerations, the principal aim of the present invention is to provide a storage plant of articles with high longitudinal development, in particular a storage plant of rolls of fabric, that overcomes the drawbacks and the problems described above.

Within this aim, an object of the present invention is to provide a storage plant of articles with high longitudinal development, in particular a storage plant of rolls of fabric, which allows the efficient management of operations to pick up and set down articles from and in their storage positions.

Another object of the present invention is to provide a storage plant of articles with high longitudinal development, in particular a storage plant of rolls of fabric, in which the operation to pick up rolls, cut fabric and return the rolls to the storage position is rapid, efficient and allows use of the warehouse shelves to be maximized.

Yet another object of the present invention is that of providing a storage plant of articles with high longitudinal development, in particular a storage plant of rolls of fabric, which is highly reliable and is easy to produce at competitive costs.

This aim, and these and other objects that will be more apparent below, are achieved with a storage plant according to claim 1.

It has in fact been seen that a storage plant of articles with high longitudinal development - in particular rolls of fabric - thus conceived has a range of characteristics and properties that allow the drawbacks and problems described above to be solved.

In particular, as better explained below, it has been seen that thanks to the particular type of support used to move the rolls when they are on the vehicle from and toward the shelves and due to the particular type of support used to hold the rolls in the shelves, these can be very rapidly removed from and returned to any point of the shelves without the need to leave empty spaces on these shelves.

Moreover, due to their structure, the supports are suitable to hold the rolls regardless of their size. In other words, even if the roll of fabric decreases in diameter following the operation to cut and collect a given amount of fabric, in the plant according to the invention the supports are always and in any case adapted to hold them, regardless of their diameter.

For the objects of the present invention, considering the substantially cylindrical development of the rolls, the term "longitudinally" means the direction along which the axis of the cylinder that joins the two bases extends. When referred to the second supporting surface, this term therefore indicates that the opening present therein extends parallel to the axis of the cylindrical roll of fabric when this is positioned on the supporting surface.

Advantageously, said transfer means, for example consisting of lifting and transport beams (or of telescopic devices or other vehicles) move between said first position and said second position in the direction substantially perpendicular to said storage lane.

In other words, the articles (the rolls of fabric) are loaded on the movement means, generally consisting of storage and retrieval machine, with their axis perpendicular to the direction of movement along the lane. At the position of discharge onto the shelf, the article is carried to the height corresponding to the storage position and inserted into the shelf with movement of the transfer means (beams) perpendicular to the direction of the lane.

During this insertion step, as better described below, the base of the first support means is free to slide through the opening present in the second support means. Once the roll has been inserted into the shelf, the transfer means (beams) are lowered, allowing the roll to rest on the second supporting surface (the one on the shelf) at the same time freeing the first supporting surface (the one on the beams).

In other words, and more generally, in the storage plant of articles according to the present invention, said transfer means are movable between a first position of transport of said articles on said movement means (in practice, the position in which the rolls are located when they are on the storage and retrieval device), a second position of transfer of said articles in said shelf (in practice, the position in which the rolls are located on the beams during transfer from the storage and retrieval device to the shelf), and a third position of discharge of said articles into said shelf (in practice, the final position when the rolls are positioned on the shelf).

The movement between said first and second position is therefore substantially horizontal and transverse to the lane in which the shelf is positioned and the movement between said second and third position is substantially vertical and corresponds to the step of placing on the shelf. As better described below, in order to ensure free movement of the first and second support means the former through the latter, in said third position, of discharge of said articles into said shelf, said first and said second support means are transversally staggered with respect to each other. In practice, in operating conditions said first support means are advantageously positioned so as to hold said articles in a different position with respect to said second support means.

From the production point of view, said first supporting surface of said articles preferably comprises a curved surface that extends continuously for at least a part of the length of said articles.

Alternatively, said first supporting surface of said articles can instead preferably comprise a plurality of curved surfaces positioned spaced apart from each other for at least a part of the length of said articles.

According to the present invention, the second support means comprise one or more rings fastened superiorly to said shelf. These rings have an opening that is positioned at the lower end of said one or more rings, and that divides the supporting surface into two portions.

In another embodiment of a storage plant of articles which is not part of the invention, the second support means comprise one or more support cradles that are fixed inferiorly to said shelf and that project upward. The cradle is (or the cradles are) advantageously divided into two (or more) semi-support cradles by an opening that in practice therefore divides the supporting surface into two portions (corresponding to the two semicradles).

Further characteristics and advantages of the present invention will be more apparent from the description of preferred, but not exclusive, embodiments of a storage plant of articles, in particular rolls of fabric, according to the present invention, illustrated by way of non-limiting example in the accompanying drawings, wherein:
- Fig. 1 shows a first partial perspective view from the lane side of a first embodiment of a storage plant of articles according to the present invention;
- Fig. 2 shows an enlarged view of some parts of the plant of Fig. 1;
- Fig. 3 shows a second partial perspective view from the lane side of the storage plant of articles of Fig. 1;
- Fig. 4 shows an enlarged view of some parts of the plant of Fig. 3;
- Fig. 5 shows a third partial perspective view from the shelf side of the storage plant of articles of Fig. 1;
- Fig. 6 shows a fourth side view of the storage plant of articles of Fig. 1;
- Fig. 7 shows a fifth front view from the shelf side of the storage plant of articles of Fig. 1;
- Fig. 8 shows a sixth front view from the lane side of the storage plant of articles of Fig. 1;
- Fig. 9 shows a first partial perspective view from the lane side of a second embodiment of a storage plant of articles which is not part of the invention;
- Fig. 10 shows a second partial perspective view from the lane side of the storage plant of articles of Fig. 9;
- Fig. 11 shows a third front view from the lane side of the storage plant of articles of Fig. 9;
- Fig. 12 shows a fourth side view of the storage plant of articles of Fig. 9;
- Fig. 13 shows a fifth partial perspective view from the shelf side of the storage plant of articles of Fig. 9;
- Fig. 14 shows a sixth partial perspective view from the shelf side of the storage plant of articles of Fig. 9;
- Fig. 15 shows a seventh front view from the shelf side of the storage plant of articles of Fig. 9.

With reference to the accompanying figures a storage plant of articles with high longitudinal development, designated with the reference numeral 1, comprises - in its most general embodiment - at least one storage shelf 3 of said articles disposed along a storage lane. The plant 1 further comprises movement means 4 of said articles that are movable in said storage lane both horizontally and vertically along said shelf 3. Typically, the movement means 4 of the articles can consist of storage and retrieval machine of common type; equipment of this type is widely known and therefore will not be described in greater detail.

In the embodiments illustrated in the accompanying figures, the articles with high longitudinal development consist of rolls of fabric 2, 20 that can have different diameters.

One of the peculiar characteristics of the storage plant of articles according to the present invention is given by the fact that said movement means 4 comprise transfer means 5 that are movable between a first position of transport of the rolls 2, 20 on said movement means 4, and a second position, of transfer of the articles 2, 20 in said shelf 3, and vice versa.

In practice, the transfer means 5 can advantageously be transport beams and the first position corresponds to the position of the rolls when they are on the storage and retrieval machine, while the second position corresponds to the position of transfer from the storage and retrieval machine to the shelf. The movement can naturally be carried out in both directions (i.e., transfer of a roll from the shelf to the storage and retrieval machine). In the accompanying figures, there is indicated with the reference numeral 21 a roll that is being transferred from the storage and retrieval machine to the shelf 3, and with the reference numeral 22 a roll that has just be placed on the shelf 3.

Advantageously, said transfer means 5 comprise first support means 50 that have a base 51 and a first supporting surface 52 of said articles 2, 20.

Preferably; said first supporting surface 52 of said articles 2, 20, 21, 22 comprises a curved surface that extends continuously for at least a part of the length of the articles 2, 20, 21, 22. Alternatively, said first supporting surface 52 of said articles 2, 20, 21, 22 can instead comprise a plurality of curved surfaces that are positioned spaced apart from each other for at least a part of the length of the articles 2, 20, 21, 22.

In the embodiments illustrate in the accompanying figures, the first supporting surface 52 is produced according to this latter method with two curved surfaces placed at the ends of the base 51, so as to be positioned at two positions spaced apart from each other for approximately a third of the longitudinal development of the roll of fabric 2. However, it would also be possible, for example, to have a first supporting surface 52 made in one piece and having a length substantially equal to the length of the base 51.

A further peculiar characteristic of the storage plant of articles according to the present invention is given by the fact that said shelf 3 comprises second support means 6, 7 of the articles 2, 20 comprising a second supporting surface 61, 71 of said articles 2, 20, 21, 22.

The second supporting surface 61, 71 has an opening 62, 72 which extends longitudinally along the entire extension of said second supporting surface 61, 71 dividing it into two portions, respectively 611, 612 and 711, 712.

In this way, the opening 62, 72 allows the passage of the base 51 of said first support means 50 - through the second support means 6,7 - during their movement of translation between said first position and said second position.

Therefore, in practice, in the plant 1 according to the present invention, the transfer means 5 move between a first position in which the rolls are on the storage and retrieval machine 4 and a second position corresponding to the position of transfer from the storage and retrieval machine 4 to the shelf 3, with movement in the direction substantially perpendicular to the storage lane (see position of the roll 21 during transfer between the storage and retrieval machine 4 and the shelf 3).

In carrying out this movement, the first support means 50 (positioned on the beams of the storage and retrieval machine 4) can pass through the second support means 6,7 (positioned on the shelf 3) through the openings 62, 72, thus allowing correct positioning of the rolls 2, 20 on the supporting surfaces 61, 71 of the second support means 6,7, and thus on the shelf 3. Once the rolls 2, 20 have been inserted into the shelf 3, the transfer means 5 can move to a third position of discharge of the rolls 2, 20 onto the supporting surfaces 61, 71, and then into the shelf 3 (see in the accompanying figures the position of the roll 22 that is placed on the second support means 6,7 of the shelf 3, while the first support means 50 are separated from the roll 22 and spaced apart in a lower position with respect to said roll 22).

Therefore, in practice, in the storage plant 1 of articles 2, 20 according to the present invention, the movement between said first and second position is substantially horizontal and transverse to the storage lane and the movement between said second and third position is substantially vertical.

The process described above relates to the step of transfer of the articles 2, 20 from the movement means 4 to the shelf 3; naturally, it is also possible to carry out the opposite process (i.e. transfer of the articles 2, 20 from the shelf 3 to the movement means 4 simply by reversing the sequence).

In order to allow the articles 2, 20 to be placed on the second support means 6,7 of the shelf 3, the first 50 and the second 6, 7 support means are transversally staggered with respect to each other. For the purposes of the present invention, the term "transversally staggered" means that when the transfer means 5 are in the third position of discharge of the articles 2, 20, the first support means 50 can move freely in vertical direction without interfering with the second support means 6, 7.

In other words, the first support means 50 are generally positioned so as to hold said articles 2, 20, 21, 22 in a different position with respect to said second support means 6, 7.

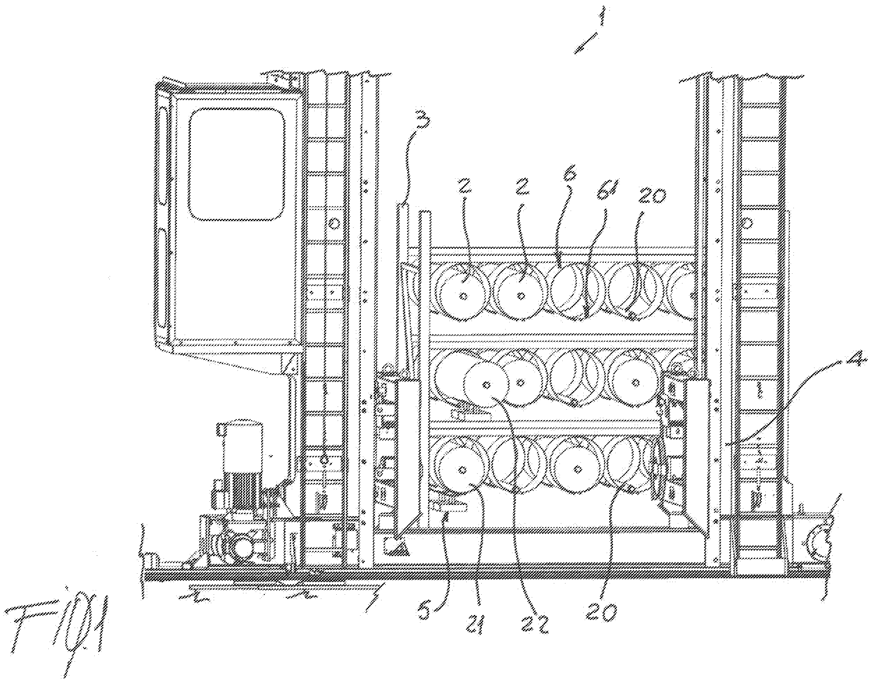

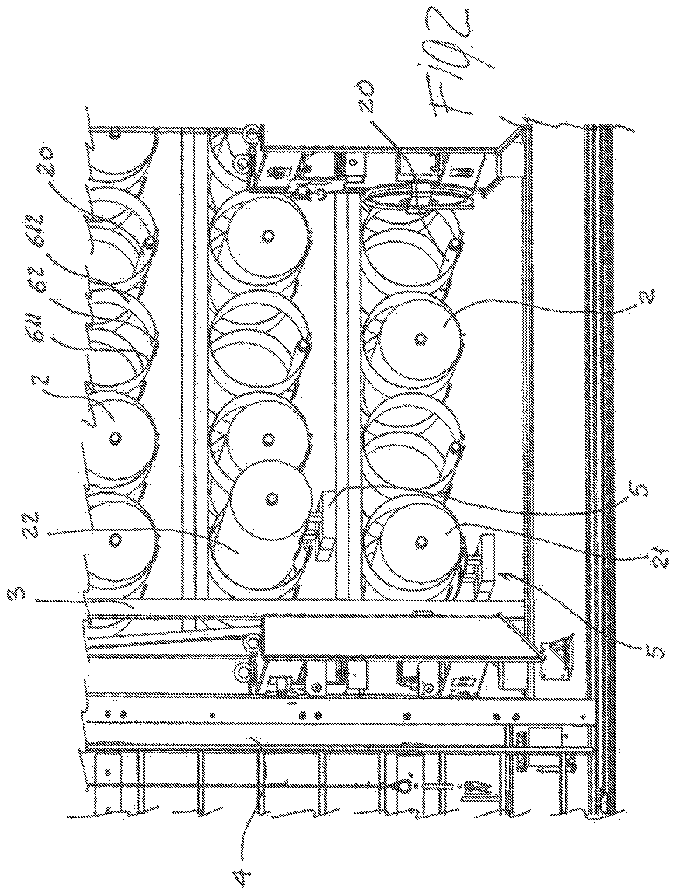

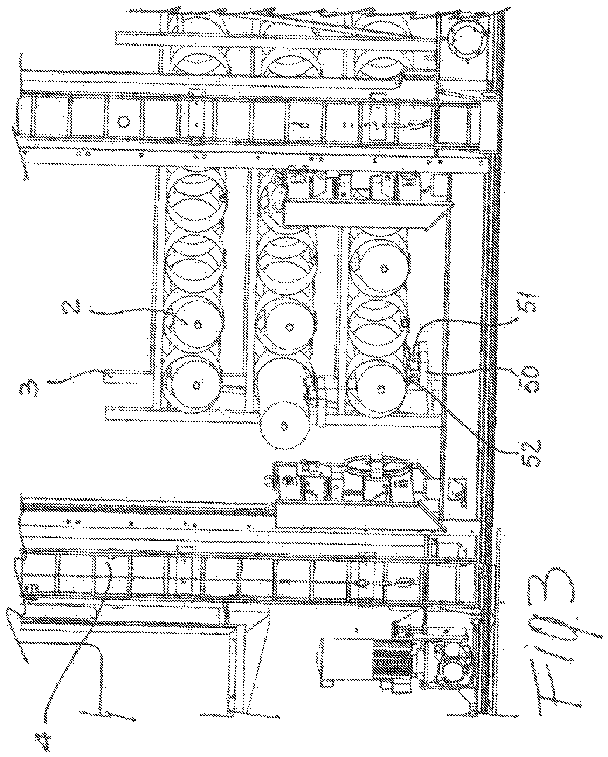

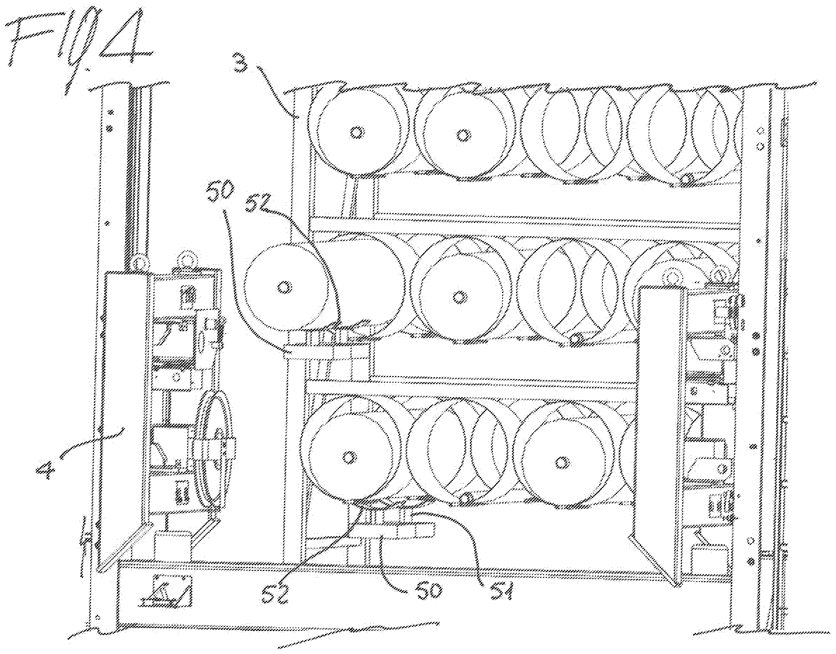

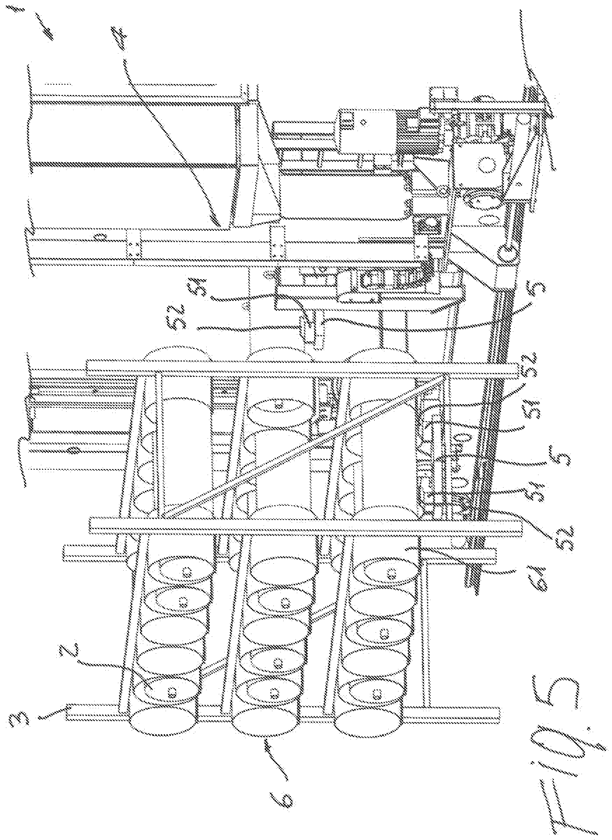

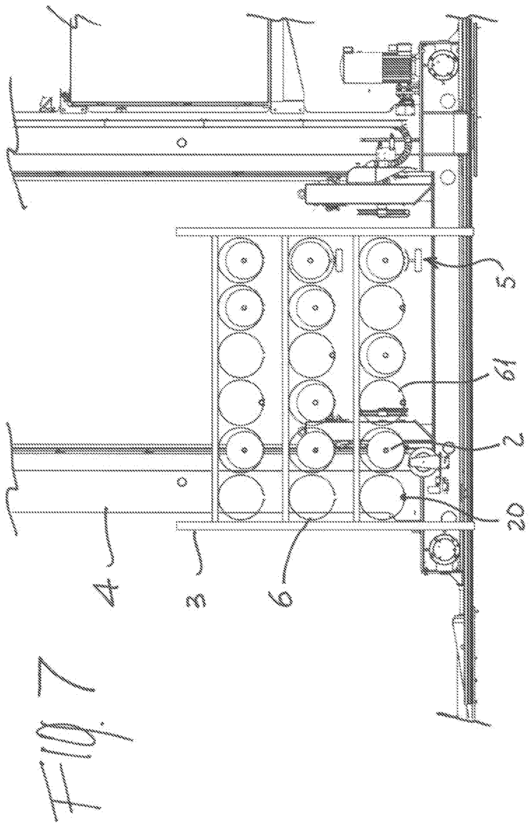

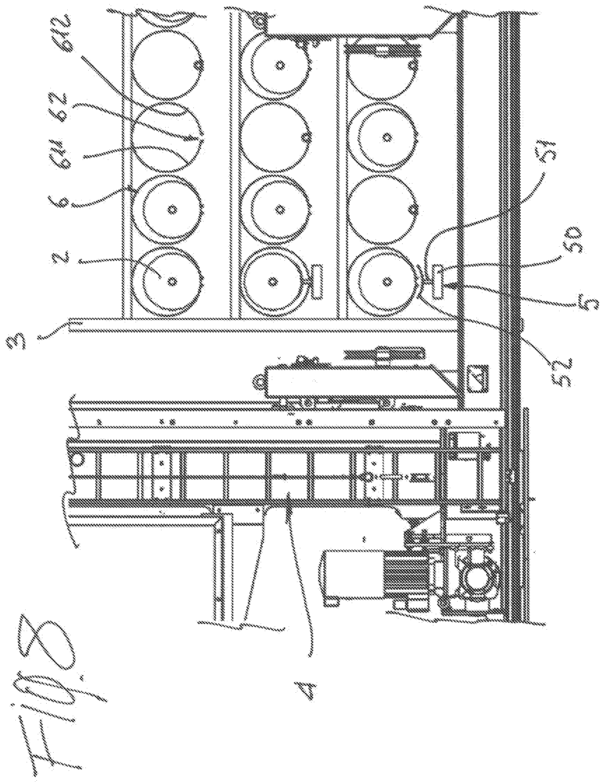

With reference to Figs. 1-8, in a first example of an embodiment of a storage plant 1 of articles 2, 20 according to the present invention, the second support means 6 comprise one or more rings that are fastened superiorly to the shelf 3. At the lower end of said one or more rings, there is positioned an opening 62 that divides the lower part of each ring into two portions 611 and 612, which form the supporting surface 61 for said articles 2, 20 once they have been inserted into the shelf 3.

Therefore, again with reference to Figs. 1-8, in practice, in the plant 1 according to the present invention, the transfer means 5 move in the direction substantially perpendicular to the storage lane starting from a first position in which the rolls 2, 20 are positioned on the transfer means 5 and moving in the direction of the shelf 3 (see position of the roll 21 during transfer between the storage and retrieval machine 4 and the shelf 3).

During this movement, the base 51 of the first support means 50 passes through the second support means 6 through the opening 62, until reaching a second position in which the first support means 50 are transversally staggered with respect to the second support means 6. In other words, in general, the first support means 50 hold the articles 2, 20, 21, 22 in a different position with respect to the second support means 6.

At this point, the transfer means 5 can move vertically downward in a third position, discharging the rolls 2, 20 from the first support means 50 onto the supporting surfaces 61, and then into the shelf 3 (see in the accompanying figures the position of the roll 22 that is placed on the second support means 6 of the shelf 3, while the first support means 50 are separated from and spaced apart in a lower position with respect to the roll 22).

For the transfer process from the shelf 3 to the movement means 4, the operating sequence is naturally reversed.

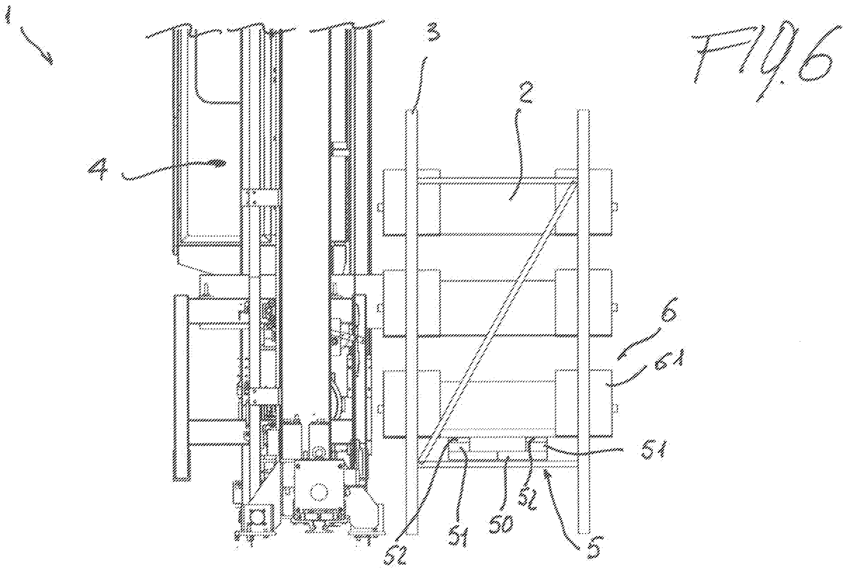

In the embodiment illustrated in the accompanying Figs. 1-8, the second support means 6 consist of two rings that are fastened superiorly to the shelf 3 at the end portions of the roll 2 (see in particular the side view of Fig. 6). In this case, the first support means 50 comprise a first supporting surface 52 that is produced with two curved surfaces placed at the ends of the base 51, and the base 51 has a dimension such as to be interposed between and without overlapping the two rings forming the second support means 6. In general, it can be said that the first support means 50 can be produced so as to be positioned staggered with respect to the second support means 6.

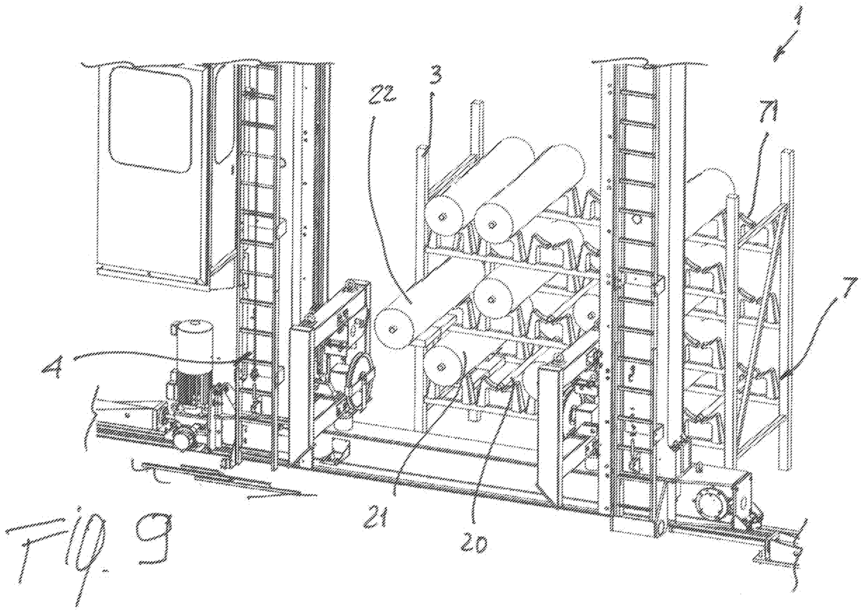

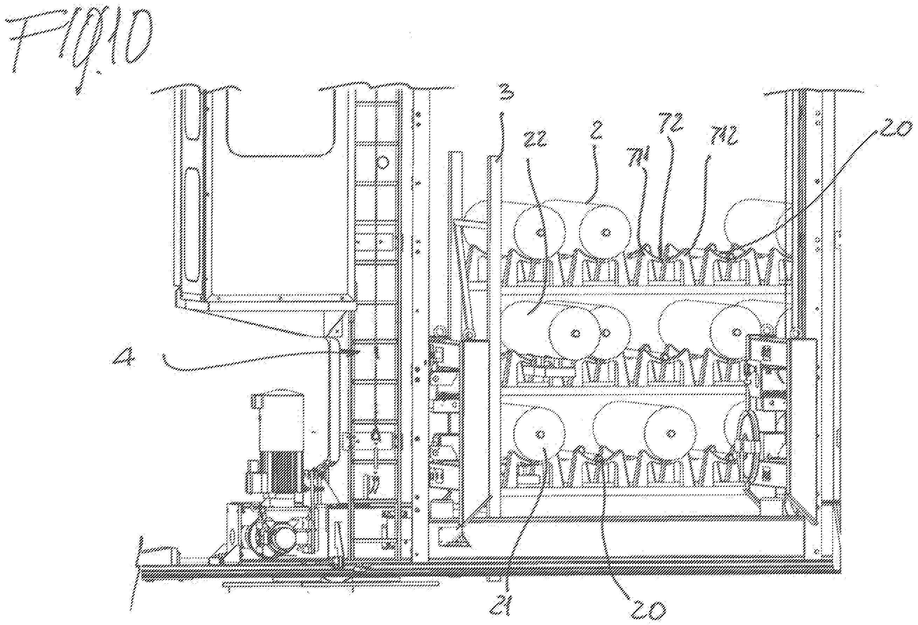

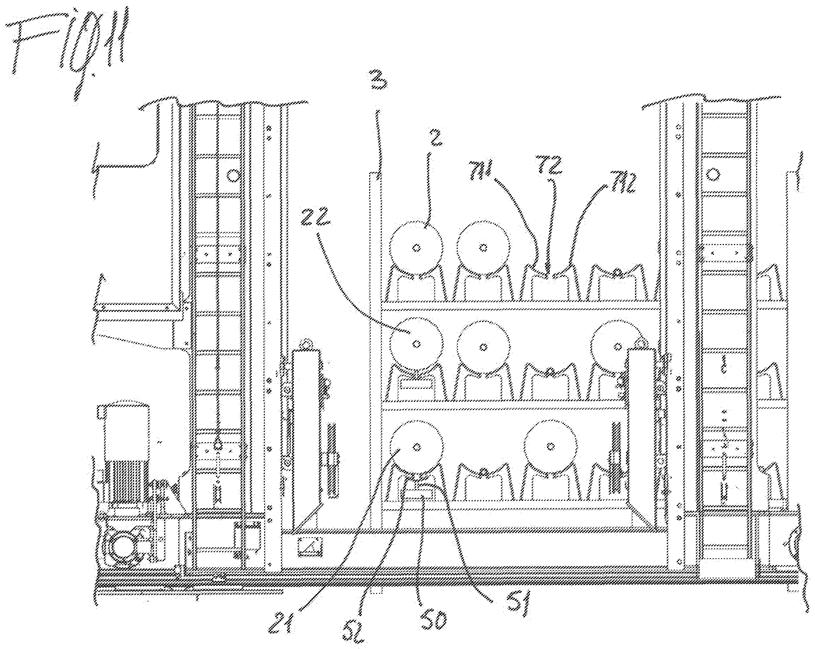

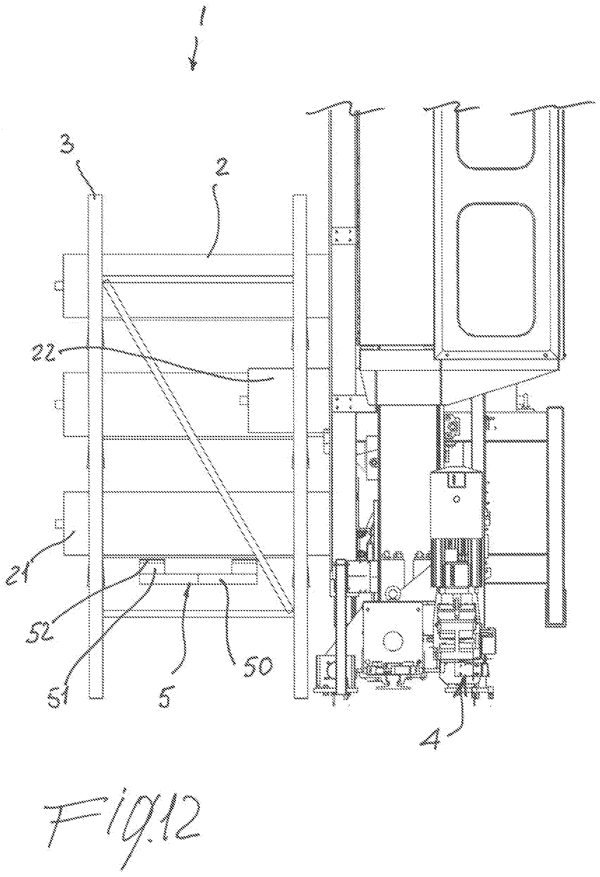

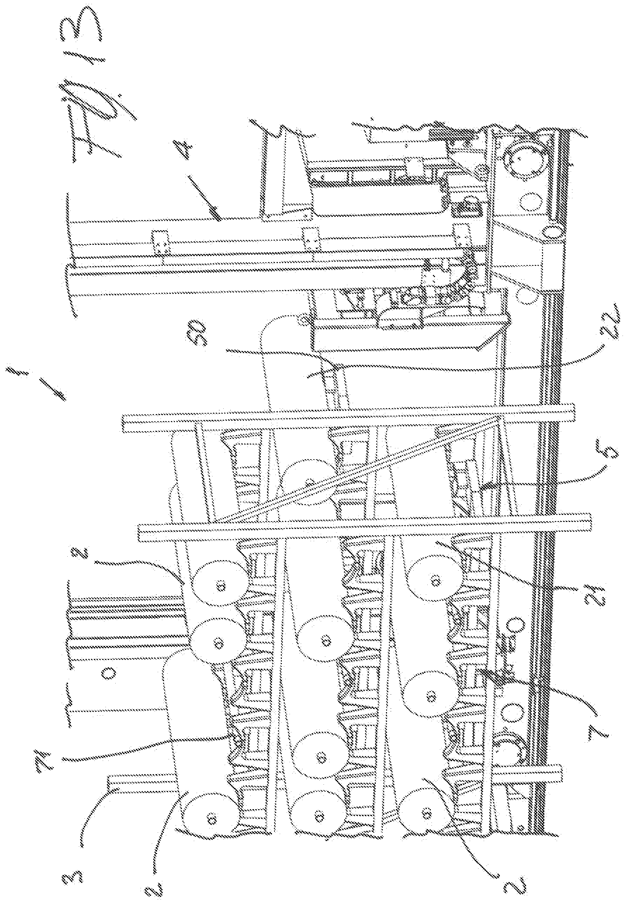

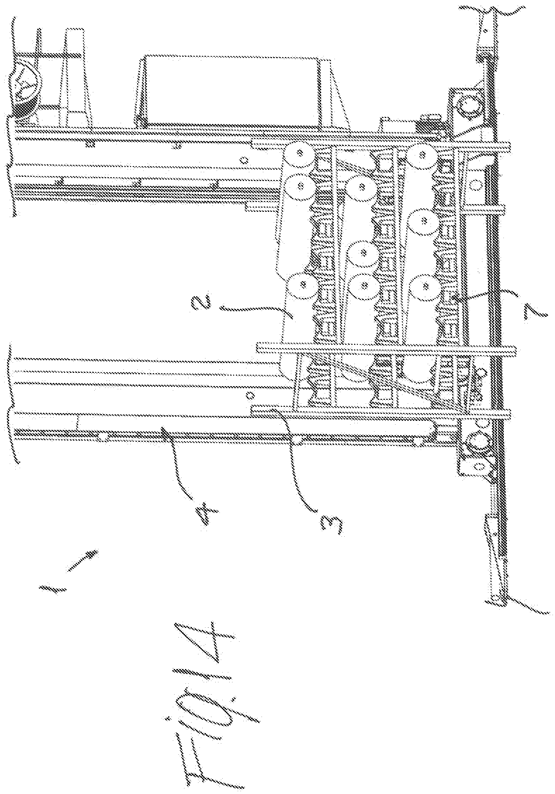

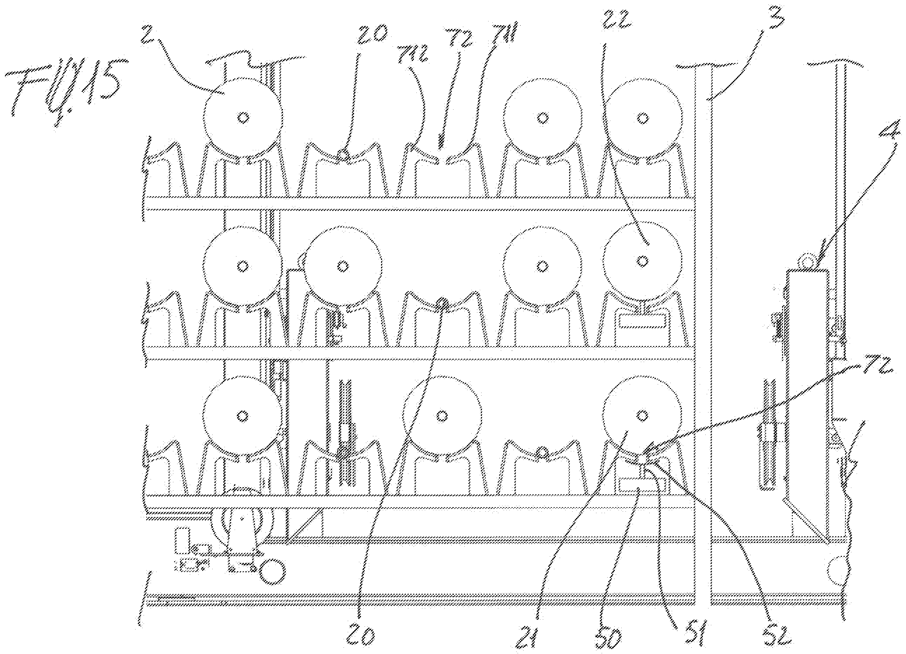

With reference to Figs. 9-15, in an example of an embodiment of a storage plant 1 of articles 2, 20 which is not part of the present invention the second support means 7 of said articles 2, 20 comprise one or more support cradles that are fixed inferiorly to said shelf 3. Each of said cradles is advantageously divided into two corresponding semicradles through an opening 72. In practice, in this embodiment, once the articles 2, 20 are positioned in the shelf 3, they are resting on two supporting surfaces 711 and 712 generated by the division of an ideal supporting surface 71 into two portions 711 and 712 by means of the opening 72.

Just as in the preceding case, in practice, in the plant 1 according to the embodiment of Figs. 9-15, the transfer means 5 move in the direction substantially perpendicular to the storage lane starting from a first position in which the rolls 2, 20 are positioned on the transfer means 5 and moving in the direction of the shelf 3 (see position of the roll 21 during transfer between the storage and retrieval machine 4 and the shelf 3).

During this movement, the base 51 of the first support means 50 passes through the second support means 7 through the opening 72, until reaching a second position in which the first support means 50 are transversally staggered with respect to the second support means 7.

At this point, the transfer means 5 can move vertically downward in a third position, discharging the rolls 2, 20 from the first support means 50 onto the supporting surfaces 71, and then into the shelf 3 (see in the accompanying figures the position of the roll 22 that is placed on the second support means 7 of the shelf 3, while the first support means 50 are separated from and spaced apart in a lower position with respect to the roll 22).

Also in this case, for the process of transfer from the shelf 3 to the movement means 4, the operating sequence is naturally reversed.

In the embodiment illustrated in the accompanying Figs. 9-15, the second support means 7 consist of two pairs of semicradles that are fixed inferiorly to the shelf 3 at the end portions of the roll 2. Just as in the preceding case, here too the first support means 50 comprise a first supporting surface 52 that is produced with two curved surfaces placed at the ends of the base 51, and the base 51 has a dimension such as to be interposed between and without overlapping the two pairs of semicradles forming the second support means 7.

In general it can be said that the first support means 50 can be produced so as to be positioned staggered with respect to the second support means 6. In other words, it can be said that the number and the positioning of the first support means 50 and of the second support means 6, 7 is such that in operating conditions said support means 50 can hold the articles 2, 20, 21, 22 in a different position with respect to the second support means 6,7.

Moreover, as can be noted from the accompanying figures, the plant 1 according to the present invention is also extremely flexible as it allows rolls 2, 20 even with substantially different diameters to be managed without making any particular adaptations.

Based on the description above, it has been seen how the storage plant of articles with high longitudinal development, in particular the storage plant of rolls of fabric, according to the present invention achieves the aims and objects set.

On the basis of the description provided, other characteristics, modifications or improvements are possible and evident to a person skilled in the art. In practice, the materials used, the dimensions and contingent shapes can be any according to requirements and to the state of the art.

## Claims

1. Storage plant (1) of articles (2, 20, 21, 22) with high longitudinal development, in particular rolls of fabric, comprising at least one storage shelf (3) of said articles (2, 20, 21, 22 ) disposed on a storage lane and movement means (4) of said articles (2, 20, 21, 22) movable in said lane horizontally and vertically along said shelf (3), said movement means (4 ) comprising
transfer means (5) movable between a first position, of transport of said articles (2, 20, 21, 22) on said movement means (4), and a second position, of transfer of said articles (2, 20, 21, 22) in said shelf (3), and vice versa, said transfer means (5) being adapted to transfer said articles (2, 20, 21, 22) from said movement means (4) to said shelf ( 3) and vice versa, said transfer means (5) comprising first support means (50) comprising a base (51) and a first supporting surface (52) for said articles (2, 20, 21, 22), and wherein
said shelf (3) comprises second support means (6, 7) of said articles (2, 20, 21, 22) comprising a second supporting surface (61, 71) of said articles (2, 20, 21, 22), said second supporting surface (61, 71) having an opening (62, 72) which extends longitudinally along the entire extension of said second supporting surface (61, 71) dividing it into two portions (611,612; 711,712), said opening (62, 72) allowing the passage of said base (51) of said first supporting means (50) during their movement between said first position and said second position,
**characterized in that** said second support means (6) comprises one or more rings fastened superiorly to said shelf (3), said opening (62) being positioned at the lower end of said one or more rings.

2. Storage plant of articles (2, 20, 21, 22), according to claim 1, **characterized in that** said transfer means (5) move between said first position and said second position in a direction substantially perpendicular to said storage lane.

3. Storage plant of articles (2, 20, 21, 22), according to claim 1 or 2, **characterized in that** said transfer means (5) are movable between a first position, of transport of said articles (2, 20, 21, 22) on said movement means (4), a second position, of transfer of said articles (2, 20, 21, 22) in said shelf (3), and a third position, of discharge of said articles (2, 20, 21, 22) into said shelf (3), and vice versa.

4. Storage plant of articles (2, 20, 21, 22), according to claim 3, **characterized in that** the movement between said first and second position is substantially horizontal and transverse to said lane and the movement between said second and third position is substantially vertical.

5. Storage plant of articles (2, 20, 21, 22), according to claim 3 or 4, **characterized in that** in said third position, of discharge of said articles (2, 20, 21, 22) into said shelf (3), said first (50) and said second (6, 7) support means are transversally staggered with respect to each other.

6. Storage plant of articles (2, 20, 21, 22), according to one or more of the preceding claims, **characterized in that** said first supporting surface (52) of said articles (2, 20, 21, 22) comprises a curved surface that extends continuously for at least a part of the length of said articles (2, 20, 21, 22).

7. Storage plant of articles (2, 20, 21, 22) according to one or more of claims 1 to 5, **characterized in that** said first supporting surface (52) of said articles (2, 20, 21, 22) comprises a plurality of curved surfaces positioned spaced apart from each other for at least a part of the length of said articles (2, 20, 21, 22).

8. Storage plant of articles (2, 20, 21, 22) according to one or more of claims 1 to 7, **characterized in that** under operative conditions said first support means (50) are positioned in such a way as to support said articles (2, 20, 21, 22) in a different position with respect to said second support means (6, 7).

## Patentansprüche

1. Lageranlage (1) für Artikel (2, 20, 21, 22) mit einer hohen Längsentwicklung, im Besonderen Stoffrollen, aufweisend zumindest ein Lagerregal (3) der Artikel (2, 20, 21, 22), das sich in einer Lagergasse befindet, sowie eine Bewegungseinrichtung (4) der Artikel (2, 20, 21, 22), die horizontal in der Gasse und vertikal entlang des Regals (3) beweglich ist, wobei die Bewegungseinrichtung (4) aufweist:
eine Transfereinrichtung (5), die zwischen einer ersten Position zum Transport der Artikel (2, 20, 21, 22) auf der Bewegungseinrichtung (4) und einer zweiten Position zum Transfer der Artikel (2, 20, 21, 22) in dem Regal (3) und umgekehrt beweglich ist, wobei die Transfereinrichtung (5) darauf ausgelegt ist, die Artikel (2, 20, 21) von der Bewegungseinrichtung (4) zu dem Regal (3) und umgekehrt zu transferieren, wobei die Transfereinrichtung (5) eine erste Trageeinrichtung (50) aufweist, die einen Sockel (51) und eine erste Trageoberfläche (52) für die Artikel (2, 20, 21, 22) aufweist, und wobei das Regal (3) eine zweite Trageeinrichtung (6, 7) der Artikel (2, 20, 21, 22) aufweist,
aufweisend eine zweite Trageoberfläche (61, 71) der Artikel (2, 20, 21, 22), wobei die zweite Trageoberfläche (61, 71) eine Öffnung (62, 72) aufweist, die längsweise entlang der gesamten Länge der zweiten Trageoberfläche (61, 71) verläuft und sie in zwei Abschnitte (611, 612, 711, 712) teilt, wobei die Öffnung (62, 72) das Passieren des Sockels (51) der ersten Trageeinrichtung (50) während deren Bewegung zwischen der ersten Position und der zweiten Position ermöglicht,
**dadurch gekennzeichnet, dass** die zweite Trageeinrichtung (6) aufweist.
einen oder mehrere Ringe, die besonders fest an dem Regal (3) befestigt sind, wobei die Öffnung (62) an dem unteren Ende des einen oder der mehreren Ringe positioniert ist.

2. Lageranlage für Artikel (2, 20, 21, 22) nach Anspruch 1, **dadurch gekennzeichnet, dass** sich die Transfereinrichtung (5) zwischen der ersten Position und der zweiten Position in einer Richtung bewegt, die im Wesentlichen rechtwinklig zu der Lagergasse ist.

3. Lageranlage für Artikel (2, 20, 21, 22) nach Anspruch 1 oder 2, **dadurch gekennzeichnet, dass** die Transfereinrichtung (5) zwischen einer ersten Position zum Transport der Artikel (2, 20, 21, 22) auf der Bewegungseinrichtung (4), einer zweiten Position zum Transfer der Artikel (2, 20, 21, 22) in dem Regal (3) und einer dritten Position des Ablegens der Artikel (2, 20, 21, 22) in das Regal (3) und umgekehrt beweglich ist.

4. Lageranlage für Artikel (2, 20, 21, 22) nach Anspruch 3, **dadurch gekennzeichnet, dass** die Bewegung zwischen der ersten und der zweiten Position im Wesentlichen horizontal und quer zu der Gasse ist und die Bewegung zwischen der zweiten und der dritten Position im Wesentlichen vertikal ist.

5. Lageranlage für Artikel (2, 20, 21, 22) nach Anspruch 3 oder 4, **dadurch gekennzeichnet, dass** in der dritten Position des Ablegens der Artikel (2, 20, 21, 22) in das Regal (3) die ersten (50) und die zweiten (6, 7) Trageeinrichtungen im Verhältnis zueinander quer versetzt sind.

6. Lageranlage für Artikel (2, 20, 21, 22) nach einem oder mehreren der vorgenannten Ansprüche, **dadurch gekennzeichnet, dass** die erste Trageoberfläche (52) der Artikel (2, 20, 21, 22) eine gekrümmte Oberfläche aufweist, die für zumindest einen Teil der Länge der Artikel (2, 20, 21, 22) kontinuierlich verläuft.

7. Lageranlage für Artikel (2, 20, 21, 22) nach einem oder mehreren der Ansprüche 1 bis 5, **dadurch gekennzeichnet, dass** die erste Trageoberfläche (52) der Artikel (2, 20, 21, 22) eine Mehrzahl an gekrümmten Oberflächen aufweist, die für zumindest einen Teil der Länge der Artikel (2, 20, 21, 22) voneinander beabstandet positioniert sind.

8. Lageranlage für Artikel (2, 20, 21, 22) nach einem oder mehreren der Ansprüche 1 bis 7, **dadurch gekennzeichnet, dass** unter Betriebsbedingungen die ersten Trageeinrichtungen (50) auf solche Weise positioniert sind, dass sie die Artikel (2, 20, 21, 22) in einer im Verhältnis zu den zweiten Trageeinrichtungen (6, 7) unterschiedlichen Position tragen.

## Revendications

1. Installation de stockage (1) d'articles (2, 20, 21, 22) avec une étendue longitudinale élevée, en particulier de rouleaux de tissu, comprenant au moins une étagère de stockage (3) desdits articles (2, 20, 21, 22) disposée sur une voie de stockage et des moyens de déplacement (4) desdits articles (2, 20, 21, 22) mobiles dans ladite voie horizontalement et verticalement le long de ladite étagère (3), lesdits moyens de déplacement (4) comprenant des moyens de transfert (5) mobiles entre une première position, de transport desdits articles (2, 20, 21, 22) sur lesdits moyens de déplacement (4), et une deuxième position, de transfert desdits articles (2, 20, 21, 22) dans ladite étagère (3), et vice versa, lesdits moyens de transfert (5) étant adaptés pour transférer lesdits articles (2, 20, 21, 22) desdits moyens de déplacement (4) à ladite étagère (3) et vice versa, lesdits moyens de transfert (5) comprenant des premiers moyens de support (50) comprenant une base (51) et une première surface de support (52) pour lesdits articles (2, 20, 21, 22), et dans laquelle ladite étagère (3) comprend des seconds moyens de support (6, 7) desdits articles (2, 20, 21, 22) comprenant une seconde surface de support (61, 71) desdits articles (2, 20, 21, 22), ladite seconde surface de support (61, 71) présentant une ouverture (62, 72) qui s'étend longitudinalement le long de l'extension entière de ladite seconde surface de support (61, 71) la divisant en deux portions (611, 612 ; 711, 712), ladite ouverture (62, 72) permettant le passage de ladite base (51) desdits premiers moyens de support (50) pendant leur mouvement entre ladite première position et ladite deuxième position, **caractérisée en ce que** ledit second moyen de support (6) comprend un ou plusieurs anneaux fixés de manière supérieure à ladite étagère (3), ladite ouverture (62) étant positionnée au niveau de l'extrémité inférieure desdits un ou plusieurs anneaux.

2. Installation de stockage d'articles (2, 20, 21, 22) selon la revendication 1, **caractérisée en ce que** lesdits moyens de transfert (5) se déplacent entre ladite première position et ladite deuxième position dans une direction sensiblement perpendiculaire à ladite voie de stockage.

3. Installation de stockage d'articles (2, 20, 21, 22) selon la revendication 1 ou 2, **caractérisée en ce que** lesdits moyens de transfert (5) sont mobiles entre une première position, de transport desdits articles (2, 20, 21, 22) sur lesdits moyens de déplacement (4), une deuxième position, de transfert desdits articles (2, 20, 21, 22) dans ladite étagère (3), et une troisième position, d'évacuation desdits articles (2, 20, 21, 22) dans ladite étagère (3), et vice versa.

4. Installation de stockage d'articles (2, 20, 21, 22) selon la revendication 3, **caractérisée en ce que** le mouvement entre ladite première et deuxième position est sensiblement horizontal et transversal à ladite voie et le mouvement entre ladite deuxième et troisième position est sensiblement vertical.

5. Installation de stockage d'articles (2, 20, 21, 22) selon la revendication 3 ou 4, **caractérisée en ce que** dans ladite troisième position, d'évacuation desdits articles (2, 20, 21, 22) dans ladite étagère (3), ledit premier (50) et ledit second (6, 7) moyens de support sont échelonnés transversalement l'un par rapport à l'autre.

6. Installation de stockage d'articles (2, 20, 21, 22) selon l'une ou plusieurs des revendications précédentes, **caractérisée en ce que** ladite première surface de support (52) desdits articles (2, 20, 21, 22) comprend une surface incurvée qui s'étend en continu pour au moins une partie de la longueur desdits articles (2, 20, 21, 22).

7. Installation de stockage d'articles (2, 20, 21, 22) selon l'une ou plusieurs des revendications 1 à 5, **caractérisée en ce que** ladite première surface de support (52) desdits articles (2, 20, 21, 22) comprend une pluralité de surfaces incurvées positionnées à distance les unes des autres pour au moins une partie de la longueur desdits articles (2, 20, 21, 22).

8. Installation de stockage d'articles (2, 20, 21, 22) selon l'une ou plusieurs des revendications 1 à 7, **caractérisée en ce que** dans des conditions opérationnelles lesdits premiers moyens de support (50) sont positionnés de manière à supporter lesdits articles (2, 20, 21, 22) dans une position différente par rapport auxdits seconds moyens de support (6, 7).
